Europäisches Patentamt

European Patent Office

Office européen des brevets

(11) Publication number: **0 348 214**
**A2**

## EUROPEAN PATENT APPLICATION

(21) Application number: 89306370.1

(51) Int. Cl.⁴: **B 60 G 11/18**

(22) Date of filing: 23.06.89

(30) Priority: 24.06.88 GB 8815147

(43) Date of publication of application:
27.12.89 Bulletin 89/52

(84) Designated Contracting States:
AT BE CH DE ES FR GB GR IT LI LU NL SE

(71) Applicant: GROUP LOTUS PLC
Hethel
Norwich Norfolk NR14 8EZ (GB)

(72) Inventor: Stevens, Robert
20 Dovedale Road
Tacolneston Norfolk (GB)

(74) Representative: Jones, Ian et al
POLLAK MERCER & TENCH High Holborn House 52-54
High Holborn
London WC1V 6RY (GB)

(54) Front wheel drive suspension unit.

(57) A vehicle wheel suspension unit suited for a front wheel of a front-wheel drive motor car comprises a double wishbone structure (2,4,5,6,9) of which the inboard ends of the forward legs (2,4) are stiffly pivoted to the vehicle frame (15,17) and of which the inboard ends of the rear legs (5,7) are pivoted to a torsion tube (21) pivotably connected in turn to the frame (19) so as to have its torsion axis (25) inclined forwardly and outwardly.

FIG.1.

# Description

## FRONT WHEEL DRIVE SUSPENSION UNIT

The invention relates to a vehicle wheel suspension unit.

Particularly in connection with suspension units for suspension of the front wheels of a front wheel drive vehicle, problems of spatial organisation arise, because of the need to apply a rotational drive to the wheel as well as to mount the wheel so that it can be steered. The present invention is concerned with the provision of a suspension unit which can overcome these problems whilst still providing desirable suspension characteristics.

The invention accordingly provides a suspension unit comprising a double wishbone structure having the inboard ends of the forward or rear legs of the wishbones pivoted directly on the vehicle frame or chassis, and the inboard ends of the rear or forward legs mounted thereon by means of a torsion member. The torsion member can conveniently comprise a torsion tube having the wishbone legs pivotably mounted at its upper and lower ends, and which can be orientated to afford appropriate suspension characteristics.

The invention thus provides an advantageous suspension unit of the double wishbone type, which may be compact in respect of its anchorage arrangements, so as to allow space for steering and drive equipment for the wheel. A vehicle wheel suspension unit of the invention can be readily suited to suspension of a steerable, drivable, road wheel. The unit can be capable of accommodating forces generated under braking, thereby preserving castoring action of the unit and it can be capable of resisting diving of the vehicle body under braking, as well as countering lifting of the front of the vehicle during acceleration.

The invention is further described below, by way of illustration, with reference to the accompanying drawings, in which:

Figure 1 is a schematic perspective view of a front wheel suspension unit for a front wheel drive road vehicle in accordance with the invention, and

Figure 2 is a schematic plan view of the unit of Figure 1, with some parts omitted.

Referring to the drawings, the illustrated suspension unit comprises a double wishbone structure having upper and lower wishbones or wishbone assemblies with forward legs 2 and 4 and rear legs 5 and 7 respectively. The unit includes spring and damper means, which may be conventional and are not shown. The legs of the upper and lower wishbones are pivotably connected together at their outboard ends and to the upper and lower ends respectively of an upright wheel support member 9 by ball joints 10 and 11. More specifically, the leg 5 is pivotably connected to leg 4, with a single degree of freedom, about an approximately vertical axis. The member 9 mounts a vehicle road wheel (not shown), which is typically a front wheel of a front-wheel drive road vehicle, by means of an axle 12. The vehicle frame or chassis on which the inboard ends of the forward wishbone legs are directly pivotably mounted here comprises a longeron 15, to which the upper forward wishbone leg 2 is pivoted by a pivot 16, and an underframe member 17 which projects forwardly from a toebox 19 extending laterally of the vehicle beneath the longeron, and to which the lower forward wishbone leg is pivoted by a pivot 20.

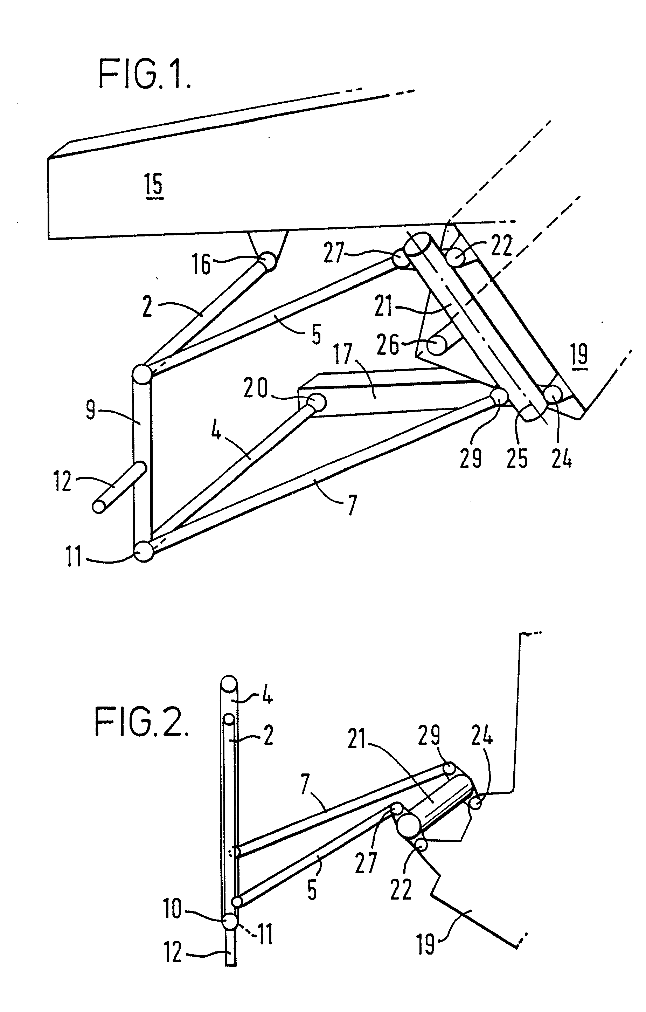

The inboard ends of the wishbone rear legs 5 and 7 are mounted at the outboard end of the toebox 19 by way of an elongate torsion member 21, which may be constituted by a torsion tube. The torsion member is carried by the toebox 19 by means of upper and lower pivots 22 and 24 positioned so that the torsion member axis of movement 25 is inclined forwardly and outwardly. A stop member or abutment in the form of a resilient connection 26, shown in Figure 1 only, which may be constituted by a voided bush, is attached to the forward edge of the torsion member 21 and can engage against the toebox to control rotation of the torsion member and to set a limit to its movement. The inboard ends of the upper and lower wishbone rear legs 5 and 7 are pivoted to the torsion tube 21 by pivots 27 and 29 respectively.

The operation of the suspension unit under particular operating conditions is now described.

When the vehicle is being braked, the top wishbone 2,5 tends to move forward about the inboard front pivot 16, so that the rear pivot 27 and the front edge of the torsion member 21 are urged outwardly. The lower wishbone 4,7 tends to move rearwardly about the inboard front pivot 20 so that the rear pivot 29 and the front edge of the torsion member 21 are urged inwardly.

The forces on the torsion member 21 are thus in opposition and the member accordingly now accommodates forces which would otherwise adversely affect the castoring action of the unit.

The weight of the vehicle acts to urge the wheel rearwardly, so that the forward edge of the torsion member 21 and the rear pivots 27 and 29 of both wishbones tend to move inwardly to an extent determined by the voided bush 26. Because of the inclination of the pivot axis of the torsion member 21 on the toebox 19, the rear wishbone pivots 27 and 29 will tend to move upwardly also, so as to resist the tendency of the vehicle body to dive under braking.

When the vehicle is being accelerated, both of the upper and the lower wishbones are urged forwardly about the front inboard pivots 16 and 20. An outward movement at the rear inboard pivots 27 and 29 consequently occurs, and this rotates the torsion tube outwardly to an extent controlled by the resilient connection 26. The rear inboard pivots 27 and 29 also tend to move downwardly, so providing a "pro squat" rotation of the axes of pivots 16,27 and 20,29 towards an inclination upwardly towards the front of the vehicle (to the left in the view of Figure 2). This provides vertical components of the driving forces, thereby tending to counteract the tendency of the front of the vehicle to lift under acceleration.

When the vehicle is driven over an uneven road surface, the wheel can move rearwardly in response to a bump, thus rotating the torsion tube inwardly against the voided bush to provide appropriate compliance.

The lateral loads experienced during cornering are transmitted along the forward legs 2 and 4 of the wishbones to the longeron 15 and the underframe 17. To afford positive lateral location for the wheel under these conditions, the pivots 1 6 and 20 are advantageously constituted by stiff bushes.

It will be evident that the invention can be embodied in other ways than as specifically described. For example, the torsion member 21 can be arranged to act on the legs 2 and 4, positioned ahead of the wheel axis.

**Claims**

1. A suspension unit for suspension of a vehicle wheel on a vehicle frame, the unit comprising a double wishbone structure (2,4,5,7,9), torsion means (21) operative between the double wishbone structure and the vehicle frame (15,17,19).

2. A suspension unit as claimed in claim 1 wherein the torsion means comprises an elongate torsion member (21) pivotably connected at its end regions to the vehicle frame by first pivots (22,24) with the torsion axis (25) of the member generally upright, the inboard ends of the forward or rear legs of the double wishbone structure being pivotably connected to the torsion member by second pivots (27,29).

3. A suspension unit as claimed in claim 2 wherein the torsion member (21) is pivotably connected to the inboard ends of the rear legs (5,7) and the torsion axis (25) is inclined forwardly and outwardly.

4. A suspension unit as claimed in claim 2 or 3 wherein the inboard ends of forward legs (2,4) of the wishbone structure are connected to the vehicle frame (15,17) by stiff bushes (16,20).

5. A suspension unit as claimed in claim 2, 3 or 4 comprising means (26) limiting rotation of the torsion member about the torsion axis (25) thereof.

6. A suspension unit as claimed in claim 5 wherein the rotation limiting means comprises a stop member (26) carried by the torsion member and engageable with the vehicle frame (19) on predetermined rotation of the torsion member (21).

7. A suspension unit as claimed in any one of claims 2-6 wherein the torsion member (21) comprises a torsion tube.

8. A suspension unit as claimed in any preceding claim wherein the double wishbone structure comprises a generally upright member (9) carrying a wheel axle (12) ball joints connecting the forward legs (2,4) of the wishbones to the member (9) at vertically spaced positions and pivots connecting the rear legs (5,7) of the wishbones to the forward legs for pivotation with a single degree of freedom about substantially vertical axes.

FIG.1.

FIG.2.